# EUROPEAN PATENT APPLICATION

(11) **EP 3 525 076 A1**
(43) Date of publication of application: **14.08.2019**
(21) Application number: 17866452.0
(22) Date of filing: 13.04.2017
(51) Int. Cl.: G06F 3/0484, G06F 3/0487

(54) **TERMINAL AND APPLICATION SWITCHING METHOD THEREOF**

(30) Priority: 01.11.2016 CN 201610942756
(71) Applicant: Huawei Technologies Co., Ltd., Longgang District Shenzhen, Guangdong 518129 (CN)
(72) Inventor: JIN, Qinghao, Shenzhen Guangdong 518129 (CN); LU, Rui, Shenzhen Guangdong 518129 (CN); CHEN, Yunzhe, Shenzhen Guangdong 518129 (CN); DING, Ziqian, Shenzhen Guangdong 518129 (CN); ZHAO, Xinyu, Shenzhen Guangdong 518129 (CN)
(74) Representative: Thun, Clemens
(86) International application number: PCT/CN2017/080477
(87) International publication number: WO 2018/082256

(57) **Abstract**

Embodiments of the present invention provide a terminal and an application switching method for the terminal, and the method includes: detecting a touch status of a secondary touch region of the intelligent terminal, where the secondary touch region is a touchable operation region independent of a primary touch region of the intelligent terminal, and an area of the secondary touch region is less than an area of the primary touch region; monitoring actions of two touch points when it is detected that the touch status is two-point touch; and switching an application according to the actions of the two touch points. In the technical solutions of the present invention, an application can be switched by performing a two-point touch operation in a secondary touch region of a terminal, so that an application can be switched easily and quickly, and user experience is improved.

## Description

### TECHNICAL FIELD

The present invention relates to the communications field, and in particular, to a terminal and an application switching method for the terminal.

### BACKGROUND

With popularization of intelligent devices (such as a smart watch/band) and rapid growth and promotion of software applications, common software applications related to life and work gradually increase, and corresponding operation functions increase accordingly. Especially, in a design and development process of an intelligent wearable device, there is a problem of implementing application (or screen of a function) switching. That is, how to switch an application interface quickly and easily becomes a technical problem related to user experience in a design and development level of an intelligent device.

At present, for most intelligent terminals in the market, especially intelligent wearable devices, a gesture or a physical key is usually used to return to a desktop level by level, and then enter a program list to find a to-be-started application, that is, a target application is started after multilevel returning. Such an application switching operation is relatively complex, and is inefficient. Usually, a next operation is not performed until a current application (or a screen of a function) is exited. Therefore, user experience is poor.

### SUMMARY

To resolve the foregoing technical problems, the present invention provides an application switching method and a terminal.

According to a first aspect, an application switching method is provided, where the method is applied to an intelligent terminal and includes: detecting a touch status of a secondary touch region of the intelligent terminal, where the secondary touch region is a touchable operation region independent of a primary touch region of the intelligent terminal, and an area of the secondary touch region is less than an area of the primary touch region; monitoring actions of two touch points when it is detected that the touch status is two-point touch; and switching an application according to the actions of the two touch points.

An application is switched by performing a two-point touch operation in a secondary touch region of a terminal, so that an application can be switched easily and quickly, and user experience is improved.

With reference to the first aspect, in a first possible implementation of the first aspect, before the detecting a touch status of a secondary touch region of the intelligent terminal, the method further includes: detecting an operating status of the intelligent terminal, where the operating status includes a standby state and a working state; and detecting the touch status of the secondary touch region when it is detected that the operating status is the working state; or maintaining a current operating state when it is detected that the operating status is the standby state.

A detection step is performed after the working state is determined, thereby avoiding a misoperation in the secondary touch region in the standby state.

With reference to the first aspect or the first possible implementation of the first aspect, in a second possible implementation of the first aspect, the monitoring actions of two touch points when it is detected that the touch status is two-point touch includes: when it is detected that the touch status is the two-point touch, monitoring whether a first touch point and a second touch point remain stationary in the secondary touch region or slide in the secondary touch region, where the first touch point is one of the two touch points, and the second touch point is the other of the two touch points.

With reference to the second possible implementation of the first aspect, in a third possible implementation of the first aspect, the switching an application according to the actions of the two touch points includes: switching from a current application to a new application when it is detected, by means of monitoring, that the first touch point remains stationary and the second touch point slides towards a specific direction; where the new application is an application that follows the current application in a preset application order, or the new application is an application that is followed by the current application in a preset application order; and the preset application order indicates an arrangement order of multiple to-be-started applications.

With reference to the second possible implementation of the first aspect, in a fourth possible implementation of the first aspect, before the monitoring whether a first touch point and a second touch point remain stationary in the secondary touch region or slide in the secondary touch region, the method further includes: displaying an application option list in any region of a screen of the intelligent terminal; where the application option list includes multiple icons arranged in order, and each icon is corresponding to one application.

With reference to the fourth possible implementation of the first aspect, in a fifth possible implementation of the first aspect, the switching an application according to the actions of the two touch points includes: when it is detected, by means of monitoring, that the first touch point remains stationary and the second touch point slides once towards a specific direction, changing a highlight icon in the application option list once in turn, where the highlight icon is an icon that is in the application option list and that is highlighted relative to another icon; and switching from a current application to an application corresponding to the highlight icon when it is detected that a touch status of the first touch point and/or a touch status of the second touch point are/is changed.

With reference to the fifth possible implementation of the first aspect, in a sixth possible implementation of the first aspect, the switching to an application corresponding to the highlight icon when it is detected that a touch status of the first touch point and/or a touch status of the second touch point are/is changed includes: switching from the current application to the application corresponding to the highlight icon when it is detected that the first touch point remains stationary and the second touch point disappears.

With reference to the sixth possible implementation of the first aspect, in a seventh possible implementation of the first aspect, the method further includes: maintaining a current application operating state when it is detected that both the first touch point and the second touch point disappear.

With reference to the fifth possible implementation of the first aspect, in an eighth possible implementation of the first aspect, the switching to an application corresponding to the highlight icon when it is detected that a touch status of the first touch point and/or a touch status of the second touch point are/is changed includes: switching to the application corresponding to the highlight icon when it is detected that the first touch point disappears or both the first touch point and the second touch point disappear.

With reference to the eighth possible implementation of the first aspect, in a ninth possible implementation of the first aspect, when it is detected that the second touch point disappears, a current application operating state is maintained.

With reference to the first aspect, or the first possible implementation of the first aspect, or the second possible implementation of the first aspect, in a tenth possible implementation of the first aspect, the switching an application according to the actions of the two touch points includes: switching from a current application to a new application when it is detected, by means of monitoring, that the first touch point and the second touch point slide in a same direction; or switching to a new application when it is detected, by means of monitoring, that the first touch point and the second touch point slide in opposite directions; where the new application is an application that follows the current application in a preset application order, or the new application is an application that is followed by the current application in a preset application order; and the preset application order indicates an arrangement order of multiple to-be-started applications.

In this embodiment of the present invention, an application can be switched by performing a two-point touch operation in a secondary touch region of a terminal, so that an application can be switched easily and quickly, and user experience is improved.

According to a second aspect, an intelligent terminal is provided, including a primary touch region, a secondary touch region, a first detection module, a monitoring module, and a switching module; where the primary touch region is a primary touch operation region of the intelligent terminal; the secondary touch region is a touch operation region independent of the primary touch region, and an area of the secondary touch region is less than an area of the primary touch region; the first detection module is configured to detect a touch status of the secondary touch region; the monitoring module is configured to monitor actions of two touch points when the first detection module detects that the touch status is two-point touch; and the switching module is configured to switch an application according to the actions that are of the two touch points and that are obtained by the monitoring module.

With reference to the second aspect, in a first possible implementation of the second aspect, the intelligent terminal further includes a second detection module, where the second detection module is configured to detect an operating status of the intelligent terminal, where the operating status includes a standby state and a working state.

With reference to the second aspect or the first possible implementation of the second aspect, in a second possible implementation of the second aspect, the monitoring module is specifically configured to: when the first detection module detects that the touch status is the two-point touch, monitor whether a first touch point and a second touch point remain stationary in the secondary touch region or slide in the secondary touch region, where the first touch point is one of the two touch points, and the second touch point is the other of the two touch points.

With reference to the second possible implementation of the second aspect, in a third possible implementation of the second aspect, the intelligent terminal further includes a display module, where the display module is configured to display an application interaction interface and an application option list, where the application option list includes multiple icons arranged in order, and each icon is corresponding to one application.

With reference to the third possible implementation of the second aspect, in a fourth possible implementation of the second aspect, the switching module includes: a change unit, configured to: when the monitoring module detects, by means of monitoring, that the first touch point remains stationary and the second touch point slides once towards a specific direction, change a current highlight icon in the application option list once in turn, where the application option list is displayed by the display module, and the highlight icon is an icon that is in the application option list and that is highlighted relative to another icon; and a switching unit, configured to: switch from a current application to an application corresponding to the current highlight icon when the monitoring module detects that the first touch point remains stationary and the second touch point disappears.

With reference to the third possible implementation of the second aspect, in a fifth possible implementation of the second aspect, the switching module includes: a change unit, configured to: when the monitoring module detects, by means of monitoring, that the first touch point remains stationary and the second touch point slides once towards a specific direction, change a highlight icon in the application option list once in turn, where the application option list is displayed by the display module, and the highlight icon is an icon that is in the application option list and that is highlighted relative to another icon; and a switching unit, configured to: when the monitoring module detects that the first touch point disappears or both the first touch point and the second touch point disappear, switch to an application corresponding to the highlight icon changed by the change unit.

With reference to the fourth possible implementation of the second aspect or the fifth possible implementation of the second aspect, in a sixth possible implementation of the second aspect, the intelligent terminal further includes:
a maintaining module, configured to maintain a current application operating state when the monitoring module detects that both the first touch point and the second touch point disappear; or configured to maintain a current application operating state when the monitoring module detects that the second touch point disappears.

With reference to the second possible implementation of the second aspect, in a seventh possible implementation of the second aspect, the switching module is specifically configured to switch from a current application to a new application when the monitoring module detects, by means of monitoring, that the first touch point remains stationary and the second touch point slides towards a specific direction, where the new application is an application that follows the current application in a preset application order, or the new application is an application that is followed by the current application in a preset application order, and the preset application order indicates an arrangement order of multiple to-be-started applications.

With reference to the second aspect, or the first possible implementation of the second aspect, or the second possible implementation of the second aspect, in an eighth possible implementation of the second aspect, the switching module is specifically configured to: switch from a current application to a new application when the monitoring module detects, by means of monitoring, that the two touch points slide in a same direction; or switch to a new application when the monitoring module detects, by means of monitoring, that the two touch points slide in opposite directions; where the new application is an application that follows the current application in a preset application order, or the new application is an application that is followed by the current application in a preset application order, and the preset application order indicates an arrangement order of multiple to-be-started applications.

In this embodiment of the present invention, an application can be switched by performing a two-point touch operation in a secondary touch region of a terminal, so that an application can be switched easily and quickly, and user experience is improved.

According to a third aspect, a terminal is provided, including a primary touch region, a secondary touch region, a memory, and a processor; where
the primary touch region is a primary touch operation region of the intelligent terminal; the secondary touch region is a touch operation region independent of the primary touch region, and an area of the secondary touch region is less than an area of the primary touch region; the memory is configured to store a program instruction; and the processor invokes the program instruction stored in a storing module and is configured to: detect a touch status of the secondary touch region of the intelligent terminal, where the secondary touch region is a touchable operation region independent of the primary touch region of the intelligent terminal, and an area of the secondary touch region is less than an area of the primary touch region; monitor actions of two touch points when it is detected that the touch status is two-point touch; and switch an application according to the actions of the two touch points.

With reference to the third aspect, in a first possible implementation of the third aspect, the processor invokes the program instruction stored in a storing module and is configured to: before detecting the touch status of the secondary touch region of the intelligent terminal, detect an operating status of the intelligent terminal, where the operating status includes a standby state and a working state; and detect the touch status of the secondary touch region when it is detected that the operating status is the working state; or maintain a current operating state when it is detected that the operating status is the standby state.

In this embodiment of the present invention, an application can be switched by performing a two-point touch operation in a secondary touch region of a terminal, so that an application can be switched easily and quickly, and user experience is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of an application switching method according to an embodiment of the present invention;
FIG. 2 is a flowchart of an application switching method according to an embodiment of the present invention;
FIG. 3 is a schematic diagram of an intelligent terminal according to an embodiment of the present invention;
FIG. 4 is a schematic diagram of a terminal according to an embodiment of the present invention;
FIG. 5 is a schematic diagram of a scenario of an intelligent wristwatch according to an embodiment of the present invention;
FIG. 6 is a flowchart of an application switching method according to an embodiment of the present invention;
FIG. 7 is a schematic diagram of application switching for an intelligent wristwatch according to an embodiment of the present invention;
FIG. 8 is a schematic diagram of a scenario of an intelligent wristwatch according to an embodiment of the present invention;
FIG. 9 is a flowchart of an application switching method according to an embodiment of the present invention;
FIG. 10 is a schematic diagram of a scenario of an intelligent wristwatch according to an embodiment of the present invention;
FIG. 11 is a flowchart of an application switching method according to an embodiment of the present invention; and
FIG. 12 is a schematic diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

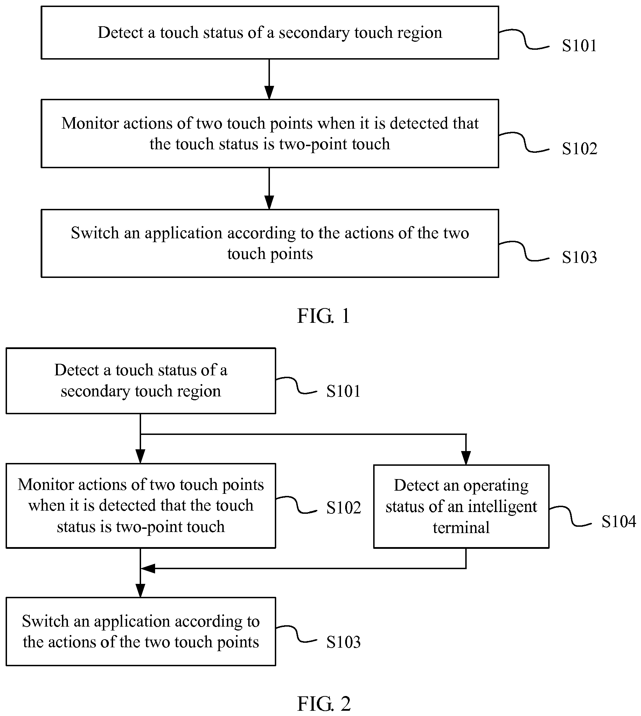

An embodiment of the present invention provides an application switching method. As shown in FIG. 1, the method includes the following steps.

S101. Detect a touch status of a secondary touch region. The secondary touch region is relative to a primary touch region or a physical operation region. An area and a quantity of operation functions of the secondary touch region usually are less than those of the primary touch region or the physical operation region. For example, a watch face screen of a smart watch is the primary touch region; and relative to the watch face screen, a watch bezel having a secondary operation function is the secondary touch region. Optionally, the secondary touch region and the primary touch region are integrated, or there is no clear boundary between the secondary touch region and the primary touch region, for example, a curved surface of a curved screen may be used as the secondary touch region. Further, the secondary touch region is a multi-touch operation region and can identify or detect a multi-touch operation. Optionally, the secondary touch region is a capacitive touchscreen.

S102. Monitor actions of two touch points when it is detected that the touch status is two-point touch.

Optionally, when it is detected that the touch status is the two-point touch, one point remains stationary, and the other point slides in the secondary touch region, the actions of the two touch points are continuously monitored. The stationary touch point is referred to as a first touch point, and the touch point sliding in the secondary touch region is referred to as a second touch point. For example, when two fingers of a user touch the secondary touch region, and two touch points are generated in the secondary touch region; one finger remains stationary, and a corresponding touch point is the first touch point; and the other finger slides in the secondary touch region, and a corresponding touch point is the second touch point.

S103. Switch an application according to the actions of the two touch points.

Optionally, switching to a new application is performed when it is detected, by means of monitoring, that the two touch points in S102 slide in a same direction; or switching to a new application is performed when it is detected, by means of monitoring, that the two touch points in S102 slide in opposite directions. The new application is defined as an application that follows a current application in a preset application order, or defined as an application that is followed by a current application in a preset application order, and the preset application order indicates an arrangement order of multiple to-be-started applications. Optionally, the preset application order may be defined by a user, or may be automatically set by an intelligent terminal. Further, if the preset application order is automatically set by the intelligent terminal, the intelligent terminal may sort installed applications according to an obtained use habit of a user or a historical use record, to generate the preset application order.

Optionally, when it is detected that the touch status is the two-point touch, one point is the first touch point, and the other point is the second touch point, the actions of the first touch point and the second touch point are continuously monitored, where the first touch point remains stationary, and the second touch point slides in the secondary touch region. Optionally, switching to a new application is performed when it is detected, by means of monitoring, that the second touch point slides towards a specific direction. The new application is defined as an application that follows a current application in a preset application order, or defined as an application that is followed by a current application in a preset application order, and the preset application order indicates an arrangement order of multiple to-be-started applications.

Optionally, before the actions of the first touch point and the second touch point are continuously monitored, the method further includes: displaying an application option list in any region of a screen of the intelligent terminal, where the application option list includes multiple icons arranged in order, and each icon is corresponding to one application; further, when it is detected, by means of monitoring, that the second touch point slides once towards a specific direction, changing a highlight icon in the application option list once in turn, where the highlight icon is defined as an icon that is in the application option list and that is highlighted; and switching to an application corresponding to the highlight icon when it is detected that the touch status is changed. Further, the switching to an application corresponding to the highlight icon when it is detected that the touch status is changed specifically includes: switching to the application corresponding to the highlight icon when it is detected that the second touch point disappears, or maintaining a current application operating state when it is detected that both the first touch point and the second touch point disappear; optionally, switching to the application corresponding to the highlight icon when it is detected that the first touch point disappears or both the first touch point and the second touch point disappear, or maintaining a current application operating state when it is detected that the second touch point disappears.

Further, as shown in FIG. 2, the application switching method further includes the following steps.

S104. Before the touch status of the secondary touch region of the intelligent terminal is detected, the method further includes: detecting an operating status of the intelligent terminal, where the operating status includes a standby state and a working state; and detecting the touch status of the secondary touch region when it is detected that the operating status is the working state; or maintaining a current operating state when it is detected that the operating status is the standby state, that is, skipping detecting the touch status of the secondary touch region, thereby avoiding a misoperation in the standby state.

It should be noted that, the application switching method provided in this embodiment may also be applied to switching of a screen of a function. For example, an application has multiple screens of functions, and a current screen of a function may be switched according to an action of a touch point in a secondary touch region, to open a new screen of a function.

In this embodiment of the present invention, an application can be switched by performing a two-point touch operation in a secondary touch region of a terminal, so that an application can be switched easily and quickly, and user experience is improved.

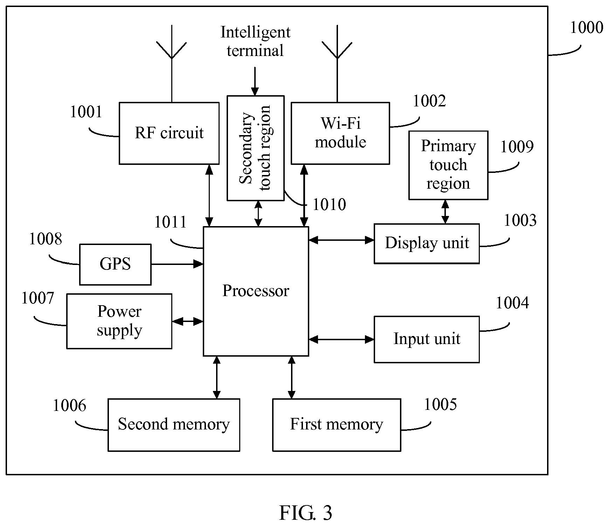

An embodiment of the present invention provides a terminal, as shown in FIG. 3, the terminal 1000 includes hardware modules such as an RF circuit 1001, a Wi-Fi module 1002, a display unit 1003, an input unit 1004, a first memory 1005, a second memory 1006, a power supply 1007, a GPS module 1008, a primary touch region 1009, a secondary touch region 1010, and a processor 1011. The terminal 1000 may be an intelligent wristwatch, an intelligent wearable device, a mobile phone, a tablet computer, a PDA (Personal Digital Assistant, personal digital assistant), a vehicle-mounted computer, or the like.

The RF circuit 1001 is configured to send and receive a communication signal.

The Wi-Fi module 1002 is configured to connect to a network and scan a network signal. The RF circuit 1001 and/or the Wi-Fi module 1002 may contact a radio base station to obtain current location coordinates of the intelligent terminal.

The display unit 1003 is configured to display a user interaction interface, and the display unit 1003 may be configured to display information entered by a user or information provided to a user, and various menu interfaces of the intelligent terminal. The display unit 1003 may include a display panel, and optionally, the display panel may be configured in a form of an LCD (Liquid Crystal Display, liquid crystal display), an OLED (Organic Light-Emitting Diode, organic light-emitting diode), or the like. In a specific implementation, the touch panel covers the display panel, to form a touch display screen. The touch display screen becomes a primary touch region of the terminal 1000. The processor 1007 provides corresponding visual output on the touch display screen according to a type of a touch event.

The input unit 1004 may be configured to receive an input digit or character information, receive a user operation of switching an application interface, generate a switching signal, and generate signal input related to user setting and function control of the terminal. Specifically, in this embodiment of the present invention, the input unit 1004 may include the touch panel, which is also referred to as a touchscreen and may collect a touch operation (for example, an operation performed by the user using any proper object or accessory such as a finger or a stylus on the touch panel) performed by the user on or near the touchscreen. In addition, the touch panel may be implemented in multiple types such as a resistive type, a capacitive type, an infrared type, and a surface acoustic wave type. In addition to the touch panel, the input unit 1004 may further include another input device, which includes but is not limited to one or more of: a physical keyboard, a function button (such as a volume control button or a switch button), a trackball, a mouse, or a joystick.

The first memory 1005 stores a preset quantity of APPs of the terminal and interface information. It may be understood that the second memory 1006 may be an external storage device of the terminal 1000, and the first memory 1005 may be an internal storage device of the intelligent terminal. The first memory 1005 may be one of the following: an NVRAM non-volatile memory, a DRAM dynamic random access memory, an SRAM static random access memory, a Flash flash memory, or the like. An operating system running on the intelligent terminal is generally installed on the first memory 1005. The second memory 1006 may be a hard disk, an optical disc, a USB flash drive, a floppy disk, a tape drive, a cloud server, or the like. Optionally, at present, some third-party APPs may also be installed on the second memory 1006.

The power supply 1007 may supply power to the entire terminal, and include lithium batteries of various models.

The GPS module 1008 is configured to obtain location coordinates of the intelligent terminal.

The primary touch region 1009 is configured to: receive an input touch action, and generate, according to the input touch action, corresponding signal input related to function control. In a specific implementation, the primary touch region 1009 and the display unit 1003 are integrated into a touchscreen.

The secondary touch region 1010 is a touch operation region independent of the primary touch region 1009. Generally, an area of the secondary touch region is less than an area of the primary touch region 1009. In a practical application, a difference between the secondary touch region 1010 and the primary touch region 1009 lies in that an operation function of the secondary touch region is single, is usually a control operation for one or more functions, and is a supplement to an operation function of the primary touch region. Therefore, an addition of the secondary touch region can avoid an instruction collision that is caused because operation functions are concentrated in the primary touch region.

The processor 1011 is a control center of the intelligent terminal, is connected to all parts of the entire terminal by using various interfaces and lines, and performs various functions of the intelligent terminal and data processing by running or executing a software program or a module or both that are stored in the first memory 1005 and invoking data stored in the second memory 1006. Optionally, the processor 1007 may include one or more processing units.

Further, the processor 1011 invokes a program instruction stored in a first storage module/second storage module and is configured to: detect a touch status of the secondary touch region 1010 of the intelligent terminal; monitor actions of two touch points when it is detected that the touch status is two-point touch; and switch an application according to the actions of the two touch points.

Further, the processor 1011 invokes the program instruction stored in the storage module and is further configured to: before detecting the touch status of the secondary touch region 1010 of the intelligent terminal, detect an operating status of the intelligent terminal, where the operating status includes a standby state and a working state; and detect the touch status of the secondary touch region 1010 when it is detected that the operating status is the working state; or maintain a current operating state when it is detected that the operating status is the standby state.

Optionally, the processor 1011 invokes the program instruction stored in the storage module and is specifically configured to: detect a touch status of the secondary touch region 1010 of the intelligent terminal; when it is detected that the touch status is two-point touch, monitor whether a first touch point and a second touch point remain stationary in the secondary touch region 1010 or slide in the secondary touch region 1010, where the first touch point is one of the two touch points, and the second touch point is the other of the two touch points; and switch from a current application to a new application when it is detected, by means of monitoring, that the first touch point remains stationary and the second touch point slides towards a specific direction, where the new application is an application that follows the current application in a preset application order, or the new application is an application that is followed by the current application in a preset application order, and the preset application order indicates an arrangement order of multiple to-be-started applications.

Optionally, the processor 1011 invokes the program instruction stored in the storage module and is specifically configured to: detect a touch status of the secondary touch region 1010 of the intelligent terminal; when it is detected that the touch status is two-point touch, monitor whether a first touch point and a second touch point remain stationary in the secondary touch region 1010 or slide in the secondary touch region 1010, where the first touch point is one of the two touch points, and the second touch point is the other of the two touch points; display an application option list in any region of the display unit 1003 of the intelligent terminal, where the application option list includes multiple icons arranged in order, and each icon is corresponding to one application; further, when it is detected, by means of monitoring, that the first touch point remains stationary and the second touch point slides once towards a specific direction, change a highlight icon in the application option list once in turn, where the highlight icon is an icon that is in the application option list and that is highlighted relative to another icon; further, switch from a current application to an application corresponding to the highlight icon when it is detected that a touch status of the first touch point and/or a touch status of the second touch point are/is changed; and further, switch from the current application to the application corresponding to the highlight icon when it is detected that the first touch point remains stationary and the second touch point disappears, or maintain a current application operating state when it is detected that both the first touch point and the second touch point disappear.

Optionally, the processor 1011 invokes the program instruction stored in the storage module and is specifically configured to: detect a touch status of the secondary touch region 1010 of the intelligent terminal; when it is detected that the touch status is two-point touch, monitor whether a first touch point and a second touch point remain stationary in the secondary touch region 1010 or slide in the secondary touch region 1010, where the first touch point is one of the two touch points, and the second touch point is the other of the two touch points; display an application option list in any region of the display unit 1003 of the intelligent terminal, where the application option list includes multiple icons arranged in order, and each icon is corresponding to one application; further, when it is detected, by means of monitoring, that the first touch point remains stationary and the second touch point slides once towards a specific direction, change a highlight icon in the application option list once in turn, where the highlight icon is an icon that is in the application option list and that is highlighted relative to another icon; further, switch from a current application to an application corresponding to the highlight icon when it is detected that a touch status of the first touch point and/or a touch status of the second touch point are/is changed; and further, switch to the application corresponding to the highlight icon when it is detected that the first touch point disappears or both the first touch point and the second touch point disappear, or maintain a current application operating state when it is detected that the second touch point disappears.

Optionally, the processor 1011 invokes the program instruction stored in the storage module and is specifically configured to: detect a touch status of the secondary touch region 1010 of the intelligent terminal; when it is detected that the touch status is two-point touch, monitor whether a first touch point and a second touch point remain stationary in the secondary touch region 1010 or slide in the secondary touch region 1010, where the first touch point is one of the two touch points, and the second touch point is the other of the two touch points; and further, switch from a current application to a new application when it is detected, by means of monitoring, that the first touch point and the second touch point slide in a same direction, or switch to a new application when it is detected, by means of monitoring, that the first touch point and the second touch point slide in opposite directions, where the new application is an application that follows the current application in a preset application order, or the new application is an application that is followed by the current application in a preset application order, and the preset application order indicates an arrangement order of multiple to-be-started applications.

In this embodiment of the present invention, an application can be switched by performing a two-point touch operation in a secondary touch region of a terminal, so that an application can be switched easily and quickly, and user experience is improved.

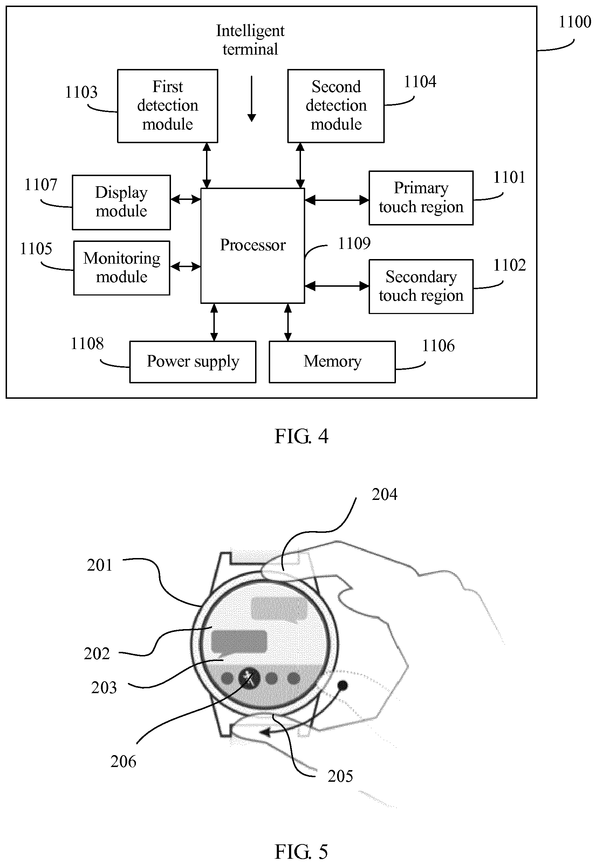

An embodiment of the present invention provides a terminal, as shown in FIG. 4, the terminal 1100 includes a primary touch region 1101, a secondary touch region 1102, a first detection module 1103, a second detection module 1104, a monitoring module 1105, a memory 1106, a display module 1107, a power supply 1108, and a processor 1109.

The primary touch region 1101 is configured to receive an input touch action, and generate, according to the input touch action, corresponding signal input related to function control. In a specific implementation, the primary touch region 1009 and a display unit 1003 are integrated into a touchscreen.

The secondary touch region 1102 is a touch operation region independent of the primary touch region. Generally, an area of the secondary touch region is less than an area of the primary touch region 1101. In a practical application, a difference between the secondary touch region and the primary touch region lies in that an operation function of the secondary touch region is single, is usually an operation for one or more functions, and is a supplement to an operation function of the primary touch region. Therefore, an addition of the secondary touch region can avoid an instruction collision that is caused because operation functions are concentrated in the primary touch region.

The first detection module 1103 is configured to detect a touch status of the secondary touch region 1101.

The second detection module 1104 is configured to detect an operating status of the terminal 1100, where the operating status includes a standby state and a working state.

The monitoring module 1105 is configured to monitor actions of two touch points in the secondary touch region 1102 when it is detected that the touch status is two-point touch.

The memory 1106 is configured to store a programmable instruction.

The display unit 1107 is configured to display a user interaction interface, and the display unit 1107 may be configured to display information entered by a user or information provided to a user, and various menu interfaces of the intelligent terminal. The display unit 1107 may include a display panel, and optionally, the display panel may be configured in a form of an LCD (Liquid Crystal Display, liquid crystal display), an OLED (Organic Light-Emitting Diode, organic light-emitting diode), or the like. In a specific implementation, the touch panel covers the display panel, to form a touch display screen. The touch display screen becomes the primary touch region 1101 of the terminal 1000. The processor 1109 provides corresponding visual output on the touch display screen according to a type of a touch event. Optionally, the display unit 1107 displays an application option list in a running process of an application switching unit. The application option list includes multiple icons arranged in order, and each icon is corresponding to one application. In a specific implementation, the application option list is displayed in a lower region of the display unit according to an instruction of the processor 1109.

The power supply 1108 may supply power to the entire terminal, and include lithium batteries of various models.

The processor 1109 is specifically configured to perform the following steps after being coupled with the programmable instruction stored in the memory.

The processor 1109 is a control center of the intelligent terminal, and is connected to all parts of the entire terminal by using various interfaces and lines, and performs various functions of the intelligent terminal and data processing by running or executing a software program or a module or both that are stored in the memory 1106 and invoking data stored in the memory 1106. Optionally, the processor 1109 may include one or more processing units.

Further, the processor 1109 is configured to be coupled with the programmable instruction stored in the memory and specifically performs the following steps: controlling the first detection module 1103 to detect a touch status of the secondary touch region 1102 of the intelligent terminal; controlling the monitoring module 1105 to monitor actions of two touch points when it is detected that the touch status is two-point touch; and switching an application according to the actions of the two touch points.

Further, the processor 1109 invokes a program instruction stored in the storage module and is further configured to: before detecting the touch status of the secondary touch region 1102 of the intelligent terminal, control the second detection module 1104 to detect an operating status of the intelligent terminal, where the operating status includes a standby state and a working state; and control the first detection module 1103 to detect the touch status of the secondary touch region when it is detected that the operating status is the working state; or maintain a current operating state when it is detected that the operating status is the standby state.

Optionally, the processor 1109 invokes a program instruction stored in the storage module and is specifically configured to: control the first detection module 1103 to detect a touch status of the secondary touch region 1102 of the intelligent terminal; when it is detected that the touch status is two-point touch, control the monitoring module 1105 to monitor whether a first touch point and a second touch point remain stationary in the secondary touch region 1102 or slide in the secondary touch region 1102, where the first touch point is one of the two touch points, and the second touch point is the other of the two touch points; and switch from a current application to a new application when it is detected, by means of monitoring, that the first touch point remains stationary and the second touch point slides towards a specific direction, where the new application is an application that follows the current application in a preset application order, or the new application is an application that is followed by the current application in a preset application order, and the preset application order indicates an arrangement order of multiple to-be-started applications.

Optionally, the processor 1109 invokes a program instruction stored in the storage module and is specifically configured to: control the first detection module 1103 to detect a touch status of the secondary touch region 1102 of the intelligent terminal; when it is detected that the touch status is two-point touch, control the monitoring module 1105 to monitor whether a first touch point and a second touch point remain stationary in the secondary touch region 1102 or slide in the secondary touch region 1102, where the first touch point is one of the two touch points, and the second touch point is the other of the two touch points; display an application option list in any region of the display unit 1107 of the intelligent terminal, where the application option list includes multiple icons arranged in order, and each icon is corresponding to one application; further, when it is detected, by means of monitoring, that the first touch point remains stationary and the second touch point slides once towards a specific direction, change a highlight icon in the application option list once in turn, where the highlight icon is an icon that is in the application option list and that is highlighted relative to another icon; further, switch from a current application to an application corresponding to the highlight icon when it is detected that a touch status of the first touch point and/or a touch status of the second touch point are/is changed; and further, switch from the current application to the application corresponding to the highlight icon when it is detected that the first touch point remains stationary and the second touch point disappears, or maintain a current application operating state when it is detected that both the first touch point and the second touch point disappear.

Optionally, the processor 1109 invokes a program instruction stored in the storage module and is specifically configured to: control the first detection module 1103 to detect a touch status of the secondary touch region 1102 of the intelligent terminal; when it is detected that the touch status is two-point touch, control the monitoring module 1105 to monitor whether a first touch point and a second touch point remain stationary in the secondary touch region 1102 or slide in the secondary touch region 1102, where the first touch point is one of the two touch points, and the second touch point is the other of the two touch points; display an application option list in any region of the display unit 1107 of the intelligent terminal, where the application option list includes multiple icons arranged in order, and each icon is corresponding to one application; further, when it is detected, by means of monitoring, that the first touch point remains stationary and the second touch point slides once towards a specific direction, change a highlight icon in the application option list once in turn, where the highlight icon is an icon that is in the application option list and that is highlighted relative to another icon; further, switch from a current application to an application corresponding to the highlight icon when it is detected that a touch status of the first touch point and/or a touch status of the second touch point are/is changed; and further, switch to the application corresponding to the highlight icon when it is detected that the first touch point disappears or both the first touch point and the second touch point disappear, or maintain a current application operating state when it is detected that the second touch point disappears.

Optionally, the processor 1011 invokes a program instruction stored in the storage module and is specifically configured to: control the first detection module 1103 to detect a touch status of the secondary touch region 1102 of the intelligent terminal; when it is detected that the touch status is two-point touch, control the monitoring module 1105 to monitor whether a first touch point and a second touch point remain stationary in the secondary touch region 1102 or slide in the secondary touch region 1102, where the first touch point is one of the two touch points, and the second touch point is the other of the two touch points; and further, switch from a current application to a new application when it is detected, by means of monitoring, that the first touch point and the second touch point slide in a same direction, or switch to a new application when it is detected, by means of monitoring, that the first touch point and the second touch point slide in opposite directions, where the new application is an application that follows the current application in a preset application order, or the new application is an application that is followed by the current application in a preset application order, and the preset application order indicates an arrangement order of multiple to-be-started applications.

It should be noted that the first detection module, the second detection module, and the monitoring module in the foregoing embodiment of the present invention may be hardware components, or may be implemented by using software. The two are specifically divided according to different functions that need to be implemented, and may be two different independent components or software programs, or may be integrated into one component or software program.

In this embodiment of the present invention, an application can be switched by performing a two-point touch operation in a secondary touch region of a terminal, so that an application can be switched easily and quickly, and user experience is improved.

An application scenario of an intelligent wristwatch is used as an example, the following embodiment provides an intelligent wristwatch and an application switching method for the intelligent wristwatch.

As shown in FIG. 5, an intelligent wristwatch and an application scenario are provided. The intelligent wristwatch includes a watch bezel 201, a watch face screen 202. Further, both the watch bezel and the watch face screen are produced by using a touchable material, such as, a capacitive touch material. Corresponding to the application switching method of this embodiment, the watch bezel 201 of the wristwatch is a secondary touch region, the watch face screen 202 of the wristwatch is a primary touch region and is a screen configured to display an interaction interface. A display region located on a lower part of the watch face screen 202 is used to display an application option list 203. Optionally, a display region in any part of the primary touch region may be used to display an application option list 203. An index finger of a user touches the watch bezel 201 and remains stationary, to generate a first touch point 204 and have a specific support function. A thumb of the user touches the watch bezel 201 and slides, to generate a second touch point 205. It should be noted that relative locations of the first touch point 204 and the second touch point 205 in FIG. 5 are not limited to a location relationship shown in FIG. 5.

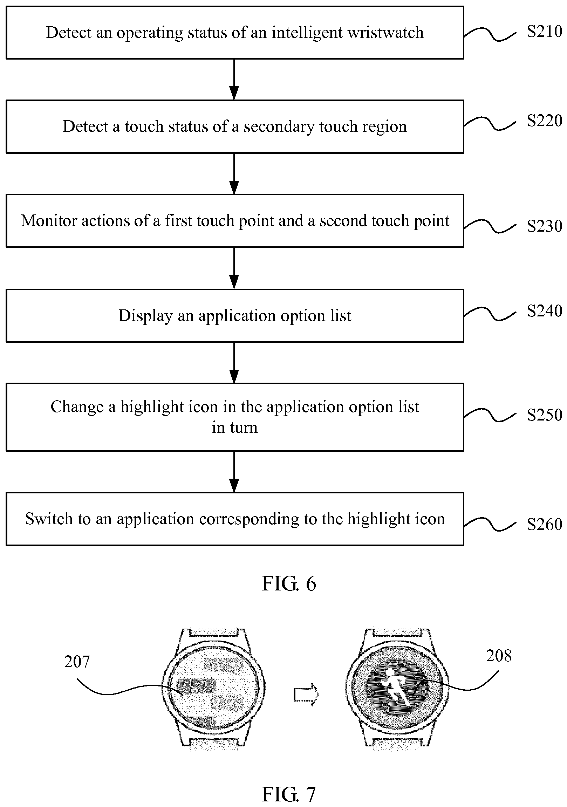

An embodiment of the present invention provides an application switching method. With reference to FIG. 5, FIG. 6, and FIG. 7, specific steps are as follows:
S210. Detect an operating status of the intelligent wristwatch, where the operating status includes a standby state and a working state.
S220. Detect a touch status of a secondary touch region when it is detected that the operating status is the working state; or maintain a current operating state when it is detected that the operating status is the standby state.
S230. When it is detected that the touch status is two-point touch, one point is a first touch point, and the other point is a second touch point, monitor actions of the first touch point and the second touch point, where the first touch point remains stationary, and the second touch point slides in the secondary touch region. As shown in FIG. 5, actually, when it is detected that an index finger of a user touches the watch bezel 201 and remains stationary, a touch point is determined as the first touch point 204; and when it is detected that a thumb of the user touches the watch bezel 201 and slides, a touch point is determined as the second touch point 205.
S240. Display an application option list in any region of a screen of an intelligent terminal, where the application option list includes multiple icons arranged in order, and each icon is corresponding to one application. As shown in FIG. 5, the application option list 203 is displayed on a lower part of the watch face screen 202.
S250. When it is detected, by means of monitoring, that the second touch point slides once towards a specific direction, change a highlight icon in the application option list once in turn, where the highlight icon is an icon that is in the application option list and that is highlighted relative to another icon. As shown in FIG. 5, after sliding of the second touch point 205 for multiple times, a sport icon 206 is magnified and displayed, and becomes a highlight icon. Optionally, a highlight icon may be highlighted in a manner of narrowing, vibration, or rendering.
S260. Switch to an application corresponding to the highlight icon when it is detected that the touch status is changed. Optionally, switching to an application corresponding to the highlight icon is performed when it is detected that the second touch point disappears; and optionally, switching to an application corresponding to the highlight icon is performed when it is detected that the first touch point disappears or both the first touch point and the second touch point disappear. As shown in FIG. 7, when the index finger and the thumb are disconnected from the watch bezel 201, an application interface of the intelligent wristwatch is switched from a current application interface 207 to an application interface 208 corresponding to the sport icon 206.

In this embodiment of the present invention, a watch bezel of an intelligent wristwatch is designed as a secondary touch region, and an application is switched by performing a two-point touch operation on the watch bezel, so that an application can be switched easily and quickly, and user experience is improved.

An application scenario of an intelligent wristwatch is used as an example, the following embodiment provides an intelligent wristwatch and an application switching method for the intelligent wristwatch.

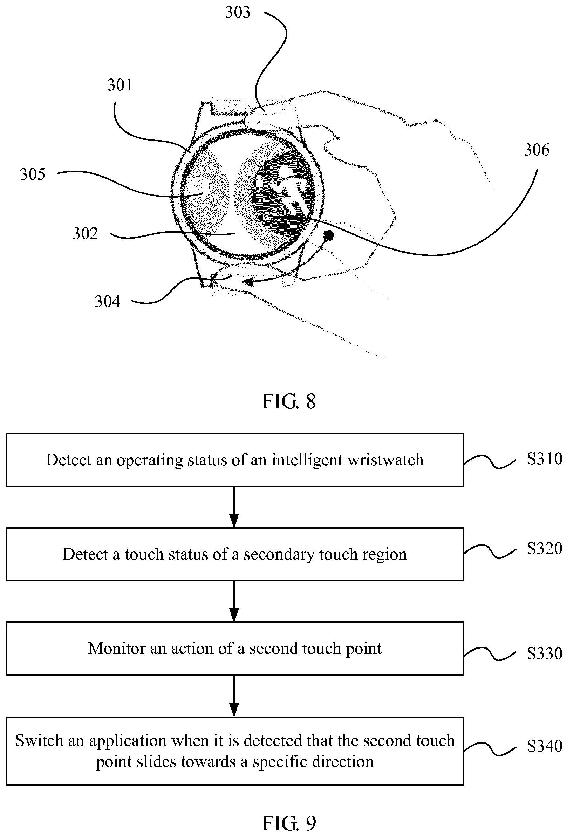

As shown in FIG. 8, an intelligent wristwatch and an application scenario are provided. The intelligent wristwatch includes a watch bezel 301 and a watch face screen 302. According to an application switching method of this embodiment, the watch bezel 301 of the wristwatch is a secondary touch region, and the watch face screen 302 of the wristwatch is a primary touch region and is a screen configured to display an interaction interface. An index finger of a user touches the watch bezel 301 and remains stationary, to generate a first touch point 303 and have a specific support function. A thumb of the user touches the watch bezel 301 and slides, to generate a second touch point 304. It should be noted that relative locations of the first touch point 303 and the second touch point 204 in FIG. 8 are not limited to a location relationship shown in FIG. 8.

An embodiment of the present invention provides an application switching method. With reference to FIG. 8, and FIG. 9, specific steps are as follows:
S310. Detect an operating status of the intelligent wristwatch, where the operating status includes a standby state and a working state.
S320. Detect a touch status of a secondary touch region when it is detected that the operating status is the working state; or maintain a current operating state when it is detected that the operating status is the standby state.
S330. When it is detected that the touch status is two-point touch, one point is a first touch point, and the other point is a second touch point, monitor actions of the first touch point and the second touch point, where the first touch point remains stationary, and the second touch point slides in the secondary touch region. As shown in FIG. 8, actually, when it is detected that an index finger of a user touches the watch bezel 301 and remains stationary, a touch point is determined as the first touch point 303; and when it is detected that a thumb of the user touches the watch bezel 301 and slides, a touch point is determined as the second touch point 304.
S340. Switch to a new application when it is detected, by means of monitoring, that the second touch point slides towards a specific direction, where the new application is an application that follows a current application in a preset application order, or the new application is an application that is followed by a current application in a preset application order, and the preset application order indicates an arrangement order of multiple to-be-started applications. As shown in FIG. 8, when the second touch point 304 slides towards a specific direction (the thumb slides downward), a current application 305 may be replaced with an application 306 following the current application 305. In a preset application order, the application 306 is an application that follows or is followed by the current application 305.

In this embodiment of the present invention, a watch bezel of an intelligent wristwatch is designed as a secondary touch region, and an application is switched by performing a two-point touch operation on the watch bezel, so that an application can be switched easily and quickly, and user experience is improved.

An application scenario of an intelligent wristwatch is used as an example, the following embodiment provides an intelligent wristwatch and an application switching method for the intelligent wristwatch.

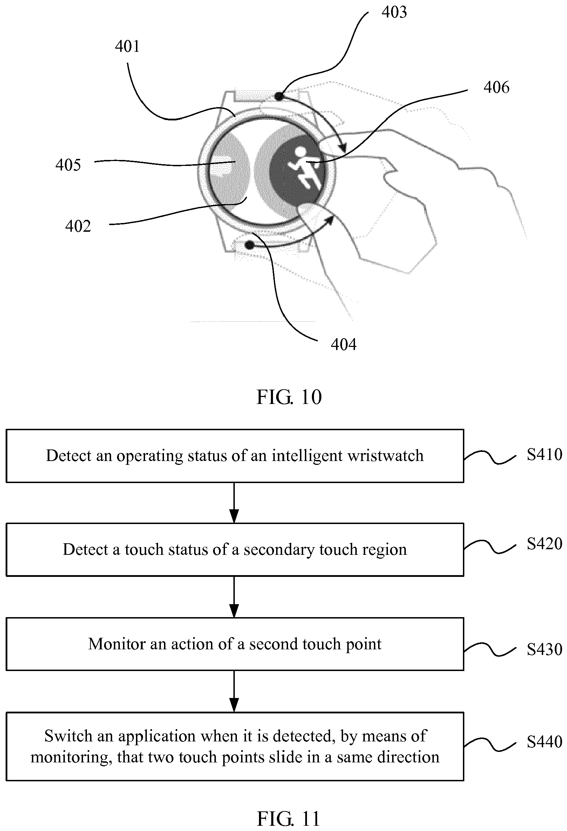

As shown in FIG. 10, an intelligent wristwatch and an application scenario are provided. The intelligent wristwatch includes a watch bezel 401 and a watch face screen 402. Corresponding to an application switching method of this embodiment, the watch bezel 401 of the wristwatch is a secondary touch region, and the watch face screen 402 of the wristwatch is a primary touch region and is a screen configured to display an interaction interface. An index finger of a user touches the watch bezel 401, to generate a first touch point 403 and have a specific support function. A thumb of the user touches the watch bezel 401, to generate a second touch point 404. It should be noted that relative locations of the first touch point 403 and the second touch point 404 in FIG. 10 are not limited to a location relationship shown in FIG. 10.

An embodiment of the present invention provides an application switching method. With reference to FIG. 10, and FIG. 11, specific steps are as follows:
S410. Detect an operating status of an intelligent wristwatch, where the operating status includes a standby state and a working state.
S420. Detect a touch status of a secondary touch region when it is detected that the operating status is the working state; or maintain a current operating state when it is detected that the operating status is the standby state.
S430. Monitor actions of two touch points when it is detected that the touch status is two-point touch.
S440. Switch to a new application when it is detected, by means of monitoring, that the two touch points slide in a same direction, where the new application is an application that follows a current application in a preset application order, or the new application is an application that is followed by a current application in a preset application order, and the preset application order indicates an arrangement order of multiple to-be-started applications. As shown in FIG. 10, the first touch point 403 and the second touch point 404 slide in a same direction, and a current application 405 is replaced with an application 406 when the first touch point 403 and the second touch point 404 slide in a same direction. Optionally, switching to a new application is performed when it is detected, by means of monitoring, that the two touch points slide in opposite directions, that is, the first touch point 403 and the second touch point 404 slide in opposite directions, that is, the two touch points slide in directions away from each other.

In this embodiment of the present invention, a watch bezel of an intelligent wristwatch is designed as a secondary touch region, and an application is switched by performing a two-point touch operation on the watch bezel, so that an application can be switched easily and quickly, and user experience is improved.

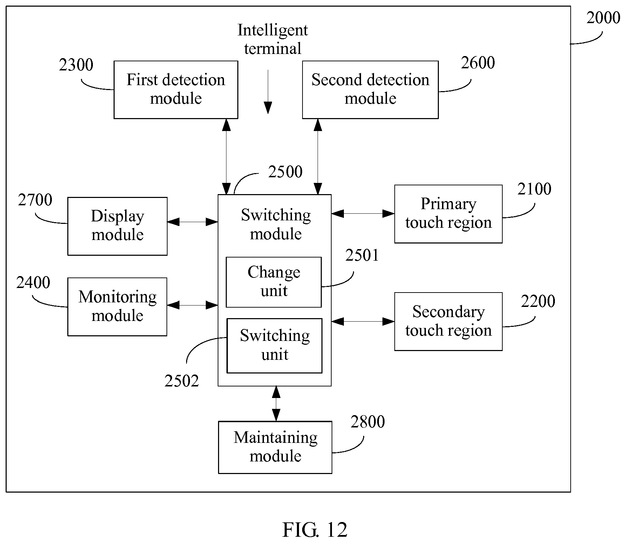

An embodiment of the present invention provides a terminal. As shown in FIG. 12, the terminal 2000 includes a primary touch region 2100, a secondary touch region 2200, a first detection module 2300, a monitoring module 2400, a switching module 2500, and a second detection module 2600.

The primary touch region 2100 is a primary touch operation region of the intelligent terminal 2000.

The secondary touch region 2200 is a touch operation region independent of the primary touch region 2100, and an area of the secondary touch region 2200 usually is less than an area of the primary touch region 2100.

The first detection module 2300 is configured to detect a touch status of the secondary touch region 2200.

The monitoring module 2400 is configured to monitor actions of two touch points when the first detection module 2300 detects that the touch status is two-point touch.

The switching module 2500 is configured to switch an application according to the actions that are of the two touch points and that are obtained by the monitoring module 2400.

The second detection module 2600 is configured to detect an operating status of the intelligent terminal 2000, where the operating status includes a standby state and a working state.

Optionally, switching from a current application to a new application is performed when the monitoring module 2400 detects, by means of monitoring, that the two touch points slide in a same direction; or switching to a new application is performed when the monitoring module 2400 detects, by means of monitoring, that the two touch points slide in opposite directions, where the new application is an application that follows the current application in a preset application order, or the new application is an application that is followed by the current application in a preset application order, and the preset application order indicates an arrangement order of multiple to-be-started applications.

Optionally, the monitoring module 2400 is specifically configured to: when the first detection module 2300 detects that the touch status is the two-point touch, monitor whether a first touch point and a second touch point remain stationary in the secondary touch region 2200 or slide in the secondary touch region 2200, where the first touch point is one of the two touch points, and the second touch point is the other of the two touch points. Further, the switching module 2500 is specifically configured to switch from a current application to a new application when the monitoring module 2400 detects, by means of monitoring, that the first touch point remains stationary and the second touch point slides towards a specific direction, where the new application is an application that follows the current application in a preset application order, or the new application is an application that is followed by the current application in a preset application order, and the preset application order indicates an arrangement order of multiple to-be-started applications.

Optionally, the terminal 2000 further includes a display module 2700, and the display module 2700 is configured to display an application interaction interface and an application option list, where the application option list includes multiple icons arranged in order, and each icon is corresponding to one application. Optionally, the switching module 2500 includes: a change unit 2501, configured to: when the monitoring module 2400 detects, by means of monitoring, that the first touch point remains stationary and the second touch point slides once towards a specific direction, change a current highlight icon in the application option list once in turn, where the application option list is displayed by the display module 2700, and the highlight icon is an icon that is in the application option list and that is highlighted relative to another icon; and a switching unit 2502, configured to switch from a current application to an application corresponding to the current highlight icon when the monitoring module 2400 detects that the first touch point remains stationary and the second touch point disappears. Optionally, the switching module 2500 includes: a change unit 2501, configured to: when the monitoring module 2400 detects, by means of monitoring, that the first touch point remains stationary and the second touch point slides once towards a specific direction, change a highlight icon in the application option list once in turn, where the application option list is displayed by the display module 2700, and the highlight icon is an icon that is in the application option list and that is highlighted relative to another icon; and a switching unit 2502, configured to: when the monitoring module 2400 detects that the first touch point disappears or both the first touch point and the second touch point disappear, switch to an application corresponding to the highlight icon changed by the change unit.

Further, the terminal 2000 further includes a maintaining module 2800, and the maintaining module 2800 is configured to maintain a current application operating state when the monitoring module 2400 detects that both the first touch point and the second touch point disappear; or the maintaining module 2800 is configured to maintain a current application operating state when the monitoring module 2400 detects that the second touch point disappears.

In this embodiment of the present invention, an application can be switched by performing a two-point touch operation in a secondary touch region of a terminal, so that an application can be switched easily and quickly, and user experience is improved.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An application switching method, wherein the method is applied to an intelligent terminal and comprises:
detecting a touch status of a secondary touch region of the intelligent terminal, wherein the secondary touch region is a touchable operation region independent of a primary touch region of the intelligent terminal, and an area of the secondary touch region is less than an area of the primary touch region;
monitoring actions of two touch points when it is detected that the touch status is two-point touch; and
switching an application according to the actions of the two touch points.

2. The method according to claim 1, before the detecting a touch status of a secondary touch region of the intelligent terminal, further comprising:
detecting an operating status of the intelligent terminal, wherein the operating status comprises a standby state and a working state; and
detecting the touch status of the secondary touch region when it is detected that the operating status is the working state; or
maintaining a current operating state when it is detected that the operating status is the standby state.

3. The method according to claim 1 or 2, wherein the monitoring actions of two touch points when it is detected that the touch status is two-point touch comprises:
when it is detected that the touch status is the two-point touch, monitoring whether a first touch point and a second touch point remain stationary in the secondary touch region or slide in the secondary touch region, wherein the first touch point is one of the two touch points, and the second touch point is the other of the two touch points.

4. The method according to claim 3, wherein the switching an application according to the actions of the two touch points comprises:
switching from a current application to a new application when it is detected, by means of monitoring, that the first touch point remains stationary and the second touch point slides towards a specific direction; wherein
the new application is an application that follows the current application in a preset application order, or the new application is an application that is followed by the current application in a preset application order; and
the preset application order indicates an arrangement order of multiple to-be-started applications.

5. The method according to claim 3, before the monitoring whether a first touch point and a second touch point remain stationary in the secondary touch region or slide in the secondary touch region, further comprising:
displaying an application option list in any region of a screen of the intelligent terminal; wherein
the application option list comprises multiple icons arranged in order, and each icon is corresponding to one application.

6. The method according to claim 5, wherein the switching an application according to the actions of the two touch points comprises:
when it is detected, by means of monitoring, that the first touch point remains stationary and the second touch point slides once towards a specific direction, changing a current highlight icon in the application option list once in turn, wherein the highlight icon is an icon that is in the application option list and that is highlighted relative to another icon; and
switching from a current application to an application corresponding to the current highlight icon when it is detected that a touch status of the first touch point and/or a touch status of the second touch point are/is changed.

7. The method according to claim 6, wherein the switching to an application corresponding to the highlight icon when it is detected that a touch status of the first touch point and/or a touch status of the second touch point are/is changed comprises:
switching from the current application to the application corresponding to the highlight icon when it is detected that the first touch point remains stationary and the second touch point disappears.

8. The method according to claim 7, further comprising:
maintaining a current application operating state when it is detected that both the first touch point and the second touch point disappear.

9. The method according to claim 6, wherein the switching to an application corresponding to the highlight icon when it is detected that a touch status of the first touch point and/or a touch status of the second touch point are/is changed comprises:
switching to the application corresponding to the highlight icon when it is detected that the first touch point disappears or both the first touch point and the second touch point disappear.

10. The method according to claim 8, further comprising:
maintaining the current application operating state when it is detected that the second touch point disappears.

11. The method according to any one of claims 1 to 3, wherein the switching an application according to the actions of the two touch points comprises:
switching from a current application to a new application when it is detected, by means of monitoring, that the first touch point and the second touch point slide in a same direction; or switching to a new application when it is detected, by means of monitoring, that the first touch point and the second touch point slide in opposite directions; wherein
the new application is an application that follows the current application in a preset application order, or the new application is an application that is followed by the current application in a preset application order; and
the preset application order indicates an arrangement order of multiple to-be-started applications.

12. An intelligent terminal, comprising a primary touch region, a secondary touch region, a first detection module, a monitoring module, and a switching module; wherein
the primary touch region is a primary touch operation region of the intelligent terminal;
the secondary touch region is a touch operation region independent of the primary touch region, and an area of the secondary touch region is less than an area of the primary touch region;
the first detection module is configured to detect a touch status of the secondary touch region;
the monitoring module is configured to monitor actions of two touch points when the first detection module detects that the touch status is two-point touch; and
the switching module is configured to switch an application according to the actions that are of the two touch points and that are obtained by the monitoring module.

13. The intelligent terminal according to claim 12, further comprising a second detection module, wherein
the second detection module is configured to detect an operating status of the intelligent terminal, wherein the operating status comprises a standby state and a working state.

14. The intelligent terminal according to claim 12 or 13, wherein the monitoring module is specifically configured to:
when the first detection module detects that the touch status is the two-point touch, monitor whether a first touch point and a second touch point remain stationary in the secondary touch region or slide in the secondary touch region, wherein the first touch point is one of the two touch points, and the second touch point is the other of the two touch points.

15. The intelligent terminal according to claim 14, further comprising a display module, wherein
the display module is configured to display an application interaction interface and an application option list, wherein the application option list comprises multiple icons arranged in order, and each icon is corresponding to one application.

16. The intelligent terminal according to claim 15, wherein the switching module comprises:
a change unit, configured to: when the monitoring module detects, by means of monitoring, that the first touch point remains stationary and the second touch point slides once towards a specific direction, change a current highlight icon in the application option list once in turn, wherein the application option list is displayed by the display module, and the highlight icon is an icon that is in the application option list and that is highlighted relative to another icon; and
a switching unit, configured to switch from a current application to an application corresponding to the current highlight icon when the monitoring module detects that the first touch point remains stationary and the second touch point disappears.

17. The intelligent terminal according to claim 15, wherein the switching module comprises:
a change unit, configured to: when the monitoring module detects, by means of monitoring, that the first touch point remains stationary and the second touch point slides once towards a specific direction, change a highlight icon in the application option list once in turn, wherein the application option list is displayed by the display module, and the highlight icon is an icon that is in the application option list and that is highlighted relative to another icon; and
a switching unit, configured to: when the monitoring module detects that the first touch point disappears or both the first touch point and the second touch point disappear, switch to an application corresponding to the highlight icon changed by the change unit.

18. The intelligent terminal according to claim 16 or 17, further comprising a maintaining module, wherein
the maintaining module is configured to maintain a current application operating state when the monitoring module detects that both the first touch point and the second touch point disappear; or
the maintaining module is configured to maintain a current application operating state when the monitoring module detects that the second touch point disappears.

19. The intelligent terminal according to claim 14, wherein the switching module is specifically configured to:
switch from a current application to a new application when the monitoring module detects, by means of monitoring, that the first touch point remains stationary and the second touch point slides towards a specific direction, wherein the new application is an application that follows the current application in a preset application order, or the new application is an application that is followed by the current application in a preset application order, and the preset application order indicates an arrangement order of multiple to-be-started applications.

20. The intelligent terminal according to any one of claims 12 to 14, wherein the switching module is specifically configured to:
switch from a current application to a new application when the monitoring module detects, by means of monitoring, that the two touch points slide in a same direction; or switch to a new application when the monitoring module detects, by means of monitoring, that the two touch points slide in opposite directions; wherein the new application is an application that follows the current application in a preset application order, or the new application is an application that is followed by the current application in a preset application order, and the preset application order indicates an arrangement order of multiple to-be-started applications.
